# EUROPÄISCHE PATENTANMELDUNG

(11) **EP 4 821 592 A1**
(43) Veröffentlichungstag der Anmeldung: **14.10.2026**
(21) Anmeldenummer: 25169809.8
(22) Anmeldetag: 10.04.2025
(51) Int. Cl.: B01J 8/00, B01J 8/02

(54) **BEFÜLLVORRICHTUNG ZUR DICHTEBEFÜLLUNG EINES CHEMISCHEN REAKTORS**

(71) Anmelder: T.I.M.E. Service Catalyst Handling GmbH, 85077 Manching (DE)
(72) Erfinder: COTA, Anna, 85077 Manching (DE); FRICKEL, Robert, 85077 Manching (DE)
(74) Vertreter: Reitstötter Kinzebach

(57) **Zusammenfassung**

Die Erfindung betrifft eine Befüllvorrichtung zur Dichtebefüllung (Dense Loading) eines chemischen Reaktors mit partikelförmigem Katalysatormaterial. Insbesondere betrifft sie eine Vorrichtung zur gleichmäßigen Verteilung des Katalysatormaterials durch Zentrifugalkraft. Weiterhin betrifft die Erfindung neuartige Verteileinrichtungen, sowie ein Verfahren zur Dichtebefüllung eines chemischen Reaktors unter Verwendung einer hierin beschriebenen Befüllvorrichtung.

## Beschreibung

### Technisches Gebiet

Die Erfindung betrifft eine Befüllvorrichtung zur Dichtebefüllung (Dense Loading) eines chemischen Reaktors mit partikelförmigem Katalysatormaterial. Insbesondere betrifft sie eine Vorrichtung zur gleichmäßigen Verteilung des Katalysatormaterials durch Zentrifugalkraft. Weiterhin betrifft die Erfindung neuartige Verteileinrichtungen, sowie ein Verfahren zur Dichtebefüllung eines chemischen Reaktors unter Verwendung einer hierin beschriebenen Befüllvorrichtung.

### Stand der Technik

Bei der Befüllung von chemischen Reaktoren mit Katalysatormaterial ist es erforderlich, eine gleichmäßige Dichteverteilung sicherzustellen, um eine optimale Reaktionsführung zu gewährleisten. Bekannte Befüllvorrichtungen neigen jedoch zu ungleichmäßiger Verteilung, was zu unerwünschten Strömungseffekten und lokalen Dichteschwankungen führt. Dies kann die Effizienz und Lebensdauer der Katalysatorschicht negativ beeinflussen.

Bisherige Lösungsansätze umfassen verschiedene mechanische und pneumatische Methoden zur Partikelverteilung, welche jedoch oft komplex, wartungsintensiv oder unzureichend in ihrer Verteilungsleistung sind.

In der internationalen Patentanmeldung WO 2017/167957 A1 der Anmelderin wird eine Befüllvorrichtung zur Dichtebefüllung eines chemischen Reaktors beschrieben, die einen Zuführbehälter für partikelförmiges Katalysatormaterial und eine drehbar unter dem Zuführbehälter angeordnete Verteileinrichtung beschreibt, bei der eine Antriebseinrichtung für die Verteileinrichtung außerhalb des Zuführbehälters angeordnet ist, sodass Beschädigung des Katalysatormaterials durch die Antriebseinrichtung vermieden werden.

### Aufgabe der Erfindung

Der vorliegenden Erfindung liegt das technische Problem zugrunde, die in der WO 2017/167957 A1 beschriebene Befüllvorrichtung im Hinblick auf eine schonende und gleichmäßige Befüllung eines Reaktors mit partikelförmigem Katalysatormaterial weiter zu verbessern.

### Zusammenfassung der Erfindung

Die Erfindung betrifft eine Befüllvorrichtung zur Dichtebefüllung eines chemischen Reaktors mit partikelförmigem Katalysatormaterial, umfassend einen zentralen, im wesentlichen radialsymmetrischen Zuführbehälter für partikelförmiges Katalysatormaterial mit einer oberen Einlassöffnung und einer unteren Auslassöffnung; eine Verteileinrichtung, die zur Verteilung des partikelförmigen Katalysatormaterials in dem chemischen Reaktor durch Zentrifugalkraft um eine vertikale Drehachse (A) drehbar unter dem Zuführbehälter angeordnet ist, wobei die Verteileinrichtung wenigstens ein erstes, ringförmiges Verteilelement umfasst, das eine obere, ringförmige, im Wesentlichen horizontale Eintrittsöffnung mit einer lichten Breite (w), eine bezüglich der Drehachse (A) radial nach außen gerichtete, im Wesentlichen vertikale Austrittsöffnung mit einer lichten Höhe (h) und ein zwischen der Eintrittsöffnung und der Austrittsöffnung angeordnetes Umlenkelement aufweist, wobei das Umlenkelement einen von dem Zufuhrbehälter kommenden, im wesentlichen vertikalen Partikelstrom in einen im wesentlichen horizontalen Partikelstrom umlenkt; ein radialsymmetrisch zu der Drehachse (A) angeordnetes Antriebslager, das einen mit dem Zuführbehälter direkt oder indirekt verbundenen, insbesondere äußeren, Festlagerring und einen mit der Verteileinrichtung verbundenen, insbesondere inneren, Drehlagerring aufweist; und eine Antriebseinrichtung, die einen seitlich versetzt zu der vertikalen Drehachse (A) außerhalb des Zuführbehälters angeordneten Antriebsmotor und Riemenantrieb aufweist, wobei der Antriebsmotor über den Riemenantrieb den Drehlagerring des Antriebslagers antreibt.

Gemäß einer ersten Ausführungsform der Erfindung ist die erfindungsgemäße Befüllvorrichtung dadurch gekennzeichnet ist, dass die lichte Höhe (h) der Austrittsöffnung größer als die lichte Breite (w) der Eintrittsöffnung ist, und dass das Umlenkelement eine Leitfläche aufweist, die an der Eintrittsöffnung eine im wesentliche vertikale Tangente (t1) und an der Austrittsöffnung eine im wesentlichen horizontale Tangente (t2) aufweist, wo sich der Krümmungsradius der Leitfläche von der Eintrittsöffnung zur Austrittsöffnung kontinuierlich vergrößert.

Gemäß einer zweiten Ausführungsform der Erfindung ist die erfindungsgemäße Befüllvorrichtung dadurch gekennzeichnet, dass das Antriebslager innerhalb eines umlaufenden Lagergehäuses angeordnet ist, das mit einem Spülgasstrom beaufschlagbar ist.

Gemäß einer dritten Ausführungsform der Erfindung ist die erfindungsgemäße Befüllvorrichtung dadurch gekennzeichnet, dass das untere Ende des Zuführbehälters wenigstens einen Ringeinsatz aufweist, der den Partikelstrom dem wenigstens einen Verteilelement zuleitet.

In weiteren Varianten der Erfindung können die Merkmale der ersten und zweiten Ausführungsform, der ersten und dritten Ausführungsform, der zweiten und dritten Ausführungsform oder aller drei Ausführungsformen miteinander kombiniert werden.

Dier Erfindung betrifft außerdem eine Verteileinrichtung die in einer eine Befüllvorrichtung verwendet werden kann. Die Verteileinrichtung umfasst wenigstens ein erstes, ringförmiges Verteilelement, das eine obere, ringförmige, im Wesentlichen horizontale Eintrittsöffnung mit einer lichten Breite (w), eine bezüglich der Drehachse (A) radial nach außen gerichtete, im Wesentlichen vertikale Austrittsöffnung mit einer lichten Höhe (h) und ein zwischen der Eintrittsöffnung und der Austrittsöffnung angeordnetes Umlenkelement aufweist, wobei das Umlenkelement einen von dem Zufuhrbehälter kommenden, im wesentlichen vertikalen Partikelstrom in einen im wesentlichen horizontalen Partikelstrom umlenkt; wobei die lichte Höhe (h) der Austrittsöffnung größer als die lichte Breite (w) der Eintrittsöffnung ist und das Umlenkelement eine Leitfläche aufweist, die an der Eintrittsöffnung eine im wesentliche vertikale Tangente (t1) und an der Austrittsöffnung eine im wesentlichen horizontale Tangente (t2) aufweist, wo sich der Krümmungsradius der Leitfläche von der Eintrittsöffnung zur Austrittsöffnung kontinuierlich vergrößert. Die erfindungsgemäße Verteileinrichtung kann entsprechend der oben beschriebenen Merkmale ausgebildet sein.

Schließlich betrifft die Erfindung auch ein Verfahren zur Dichtebefüllung eines chemischen Reaktors mit partikelförmigem Katalysatormaterial bei welchem die erfindungsgemäße Befüllvorrichtung verwendet wird.

### Detaillierte Beschreibung der Erfindung

Die vorliegende Erfindung stellt demnach gemäß der ersten Ausführungsform der Erfindung eine verbesserte Befüllvorrichtung zur Dichtebefüllung eines chemischen Reaktors mit partikelförmigem Katalysatormaterial bereit, bei der durch eine neuartige Gestaltung der Verteileinrichtung eine besonders schonende, gleichmäßige und effiziente Befüllung des Reaktors erzielt werden kann. Insbesondere durch die Ausgestaltung des ringförmigen Verteilelements mit einer spezifisch geformten Leitfläche können gegenüber dem Stand der Technik bedeutende technische Vorteile erzielt werden:
Das ringförmige Verteilelement weist eine Leitfläche auf, die einen im Wesentlichen vertikalen Partikelstrom, wie er aus dem Zuführbehälter austritt, in einen in Richtung Reaktorinnenwand gerichteten, im Wesentlichen horizontalen Partikelstrom umlenkt. Durch die kontinuierliche Vergrößerung des Krümmungsradius dieser Leitfläche wird die Umlenkung des Partikelstroms besonders sanft und gleichmäßig durchgeführt. Dadurch werden mechanische Belastungen auf die gegen mechanische Belastung hochempfindlichen Katalysatorpartikel signifikant reduziert und Partikelabrieb oder -bruch vermieden. Dies trägt wesentlich zur Erhaltung der strukturellen Integrität des Katalysatormaterials bei.

Durch die Ausbildung der Eintrittsöffnung als ringförmige, im Wesentlichen horizontale Öffnung mit einer verglichen zur Austrittsöffnung geringeren lichten Breite ergibt sich ein Strömungsverlauf, der einen gezielten und kontrollierten Transport der Partikel entlang der Leitfläche unterstützt, was eine gleichmäßige Verteilung der Partikel über den Reaktorquerschnitt hinweg fördert und lokale Inhomogenitäten, insbesondere "Hotspots" vermeidet.

Durch die Tatsache, dass die lichte Höhe der Austrittsöffnung größer als die lichte Breite der Eintrittsöffnung ist, wird ein effektiver Querschnitt für den Auswurf der Partikel geschaffen, der einen höheren Partikelstrom bei gleichzeitig geringerer Strömungsgeschwindigkeit ermöglicht. Dies reduziert den Energieeintrag in die Partikel und erhöht den Materialdurchsatz bei gleichzeitiger Reduktion der mechanischen Belastung auf die Partikel.

Wie auch bereits in der WO 2017/167957 A1 wird durch die seitlich versetzte Antriebseinrichtung außerhalb des Zuführbehälters die Gefahr von Partikelschäden durch Kollision mit zentralen Antriebselementen vermieden und die freie Durchströmung des Zuführbehälters mit Füllgut ermöglicht. Zudem wird das maximale Füllvolumen im Zuführbereich nicht durch im Zuführbehälter montierte Antriebskomponenten eingeschränkt.

Die gleichmäßige Verteilung des Katalysatormaterials im Reaktor führt zu einer homogenen Schüttungsdichte, was sich unmittelbar positiv auf die Reaktorleistung, etwa durch gleichmäßige Temperaturverteilung, geringen Druckverlust und eine definiertere Reaktionskinetik auswirkt. Die Erfindung trägt somit entscheidend zur Prozessstabilität und Effizienz erfindungsgemäß befüllter chemischer Reaktoren bei.

Die Begriffe "oben" und "unten" beziehen sich im Rahmen dieser Anmeldung auf die Ausrichtung des Geräts im bestimmungsgemäßen Betriebszustand, bei dem die Schwerkraftrichtung als Referenz dient. "Unten" bezeichnet dabei die Richtung, in die die Gravitationskraft wirkt, während "oben" die entgegengesetzte Richtung definiert.

Die Begriffe "im wesentlichen vertikal" und "im wesentlichen horizontal" bedeuten im Rahmen dieser Anmeldung, dass die Winkelabweichungen von der Vertikalen bzw. Horizontalen weniger als 20°, vorzugsweise weniger 10° und besonders bevorzugt weniger als 5° betragen.

Unter einem "Zuführbehälter" im Sinne der vorliegenden Erfindung versteht man ein Bauelement der Befüllvorrichtung, welches partikelförmiges Katalysatormaterial vor der Verteilung im Reaktor aufnimmt und als Teil der Befüllvorrichtung in den zu befüllenden Reaktor herabgelassen wird. Typischerweise ist der Zuführbehälter ein radialsymmetrisch um die Drehachse (A) ausgebildeter, insbesondere zylindrischer Behälter mit einer zylindrischen Seitenwand, einer unteren Auslassöffnung, die unmittelbar über der Verteileinrichtung angeordnet ist, sowie einer oberen Einlassöffnung, durch welche Material eingefüllt bzw. zugeführt werden kann. Die obere Einlassöffnung kann den oberen stirnseitigen Deckelbereich des zylindrischen Zuführbehälters bilden oder auch im oberen Teil der zylindrischen Seitenwand des Zuführbehälters angeordnet sein. Typischerweise dient der Zuführbehälter als Zwischenbehälter und ist über einen Zuführschlauch mit einem außerhalb des Reaktors befindlichen Vorratsbehälter für Katalysatormaterial verbunden.

Die "Verteileinrichtung" ist unterhalb des Zuführbehälters um die mittige Drehachse (A) drehbar angeordnet, sodass Partikelmaterial unter der Wirkung der Gravitationskraft in die ringförmigen Verteilelemente der Verteileinrichtung gelangen und bei Drehung der Verteileinrichtung durch Zentrifugalkraft radial nach außen in den Reaktorinnenraum ausgeworfen werden. Die Durchflussmenge an Katalysatormaterial wird von verschiedenen Parametern bestimmt, im Wesentlichen der Dimensionierungen der unteren Auslassöffnung des Zuführbehälters, der oberen Eintrittsöffnungen der Verteilelemente, der vertikalen Austrittsöffnungen der Verteilelemente, der Schütthöhe des Katalysatormaterials im Zuführbehälter und der Rotationsgeschwindigkeit der Verteileinrichtung. Zusätzlich können zwischen Zuführbehälter und Verteileinrichtung auch einstellbare Durchflusssteuerungsmittel vorgesehen sein, beispielsweise Blenden mit veränderbarer Öffnungsweite, wie sie in der internationalen Patentanmeldung WO 2017/167957 A beschrieben sind. Wie weiter unten ausführlicher beschrieben, können die Durchflusssteuerungsmittel auch als einfach durch Einlegen austauschbare Ringblenden ausgebildet sein.

Wie bereits in der internationalen Patentanmeldung WO 2017/167957 A ist auch bei der erfindungsgemäßen Befüllvorrichtung die "Antriebseinrichtung" seitlich zur vertikalen Drehachse (A) versetzt außerhalb des Zuführbehälters angeordnet und treibt die Verteileinrichtung über ein Antriebslager mittels eines Riemenantriebs an. Ein solcher Riemenantrieb hat sich gegenüber anderen Antriebsvarianten in der staubbelasteten Umgebung eines chemischen Reaktors als besonders zuverlässig erwiesen. Der Riemenantrieb kann ein Antriebsrad und einen Antriebsriemen umfassen. Das am unteren Ende des Antriebsmotors ausgebildete Antriebsrad wird von dem Antriebsmotor in Rotation versetzt und die Drehbewegung des Antriebsrades wird von dem Antriebsriemen auf den Drehlagerring des Antriebslagers übertragen. Der Antriebsmotor ist insbesondere ein pneumatischer bidirektionaler Hochleistungsmotor, der aufgrund seiner schlanken Bauweise den radialen Gesamtdurchmesser der Befüllvorrichtung nicht vergrößert, wie bereits in der WO 2017/167957 A beschrieben.

Erfindungsgemäß ist vorgesehen, dass die vertikale lichte Höhe der Austrittsöffnung des Verteilelementes größer als die horizontale lichte Breite der Eintrittsöffnung ist. Da wenigstens eines der Verteilelemente ringförmig ausgebildet ist, bildet die horizontale Eintrittsöffnung ebenfalls einen Ring und die lichte Breite der Eintrittsöffnung entspricht daher der Dicke des Rings.

Das Umlenkelement, welches den Partikelstrom von einer vertikalen Fließrichtung in eine horizontale Auswurfrichtung umlenkt, weist erfindungsgemäß eine Leitfläche auf, die an der Eintrittsöffnung eine im Wesentlichen vertikale Tangente aufweist, was der Flussrichtung der Partikel beim Übergang aus dem Zuführbehälter in das Verteilelement entspricht und an der Austrittsöffnung eine im Wesentlichen horizontale Tangente, was im Wesentlichen der Auswurfrichtung der Partikel entspricht. Zwischen Eintritts- und Austrittsöffnung vergrößert sich der Krümmungsradius der Leitfläche kontinuierlich. Vorzugsweise entspricht der Krümmungsradius der Leitfläche an der Eintrittsöffnung im Wesentlichen der horizontalen lichten Breite der Eintrittsöffnung und an der Austrittsöffnung im Wesentlichen der vertikalen lichten Höhe der Austrittsöffnung. Damit wird gewährleistet, dass sich der für den Partikelstrom im Verteilelement zur Verfügung stehende Durchtrittsquerschnitt zwischen horizontaler Eintrittsöffnung und vertikaler Austrittsöffnung nicht verringert, das heißt keine Engstelle auftritt, welche den Durchsatz an Partikelmaterial ansonsten verringern würde. Unter "Durchtrittsquerschnitt" ist dabei die lichte Fläche im Verteilelement zu verstehen, die an einer bestimmten Stelle der Leitfläche des Umlenkelements senkrecht zu der Leitfläche angeordnet ist. Vorzugsweise vergrößert sich die Durchtrittsfläche zwischen horizontaler Eintrittsöffnung und vertikaler Austrittsöffnung kontinuierlich. Die horizontale Eintrittsöffnung ist dabei eine Ringfläche, welche entlang der Leitfläche kontinuierlich in eine vertikale Mantelfläche übergeht.

Bei einer Ausführungsform der erfindungsgemäßen Befüllvorrichtung sind mehrere Verteilelemente vertikal versetzt untereinander angeordnet, wobei die horizontalen Eintrittsöffnungen und die vertikalen Austrittsöffnungen von oben nach unten bezüglich der Drehachse A radial versetzt zueinander angeordnet sind, wobei sich der radiale Abstand der Eintritts- und Austrittsöffnungen der Verteilelemente von der Drehachse A von oben nach unten verringert. Da sich im Betrieb die Verteilelemente mit gleicher Drehzahl um die Drehachse A drehen, wirken auf Partikel im obersten Verteilelement größere Zentrifugalkräfte als auf Partikel im untersten Verteilelement. Um diesen Effekt wenigstens teilweise zu kompensieren, ist vorzugsweise vorgesehen, dass das Verhältnis zwischen der lichten Höhe der Austrittsöffnung und der lichten Breite der Eintrittsöffnung bei weiter unten angeordneten Verteilelementen größer ist als bei weiter oben angeordneten Verteilelementen. Im Sinne der vorliegenden Erfindung bedeuten "oben" und "unten" relative Orientierungen bezüglich der schwerkraftgetriebenen Zufuhr der Partikel aus dem Zuführbehälter, d. h. weiter "oben" angeordnete Elemente befinden sich näher am Zuführbehälter als weiter "unten" angeordnete Elemente.

Vorzugsweise ist die lichte Höhe der Austrittsöffnung wenigstens 25% größer (1,25 mal größer) als die lichte Breite der Eintrittsöffnung. Besonders bevorzugt ist die lichte Höhe der Austrittsöffnung wenigstens 50% größer (1,5 x größer) als die lichte Breite der Eintrittsöffnung. Beispielsweise kann die lichte Höhe der Austrittsöffnung 1,25 bis 3 mal größer, vorzugsweise 1,5 bis 2 mal größer als die lichte Breite der Eintrittsöffnung sein. Damit wird gewährleistet, dass ausreichend Raum für die Umlenkung von der horizontalen in die vertikale Strömungsrichtung des Partikelstroms zur Verfügung steht und insbesondere der Austrittswiderstand an der Austrittsöffnung nach Beschleunigung der Partikel durch die Zentrifugalkraft reduziert wird. Mit der größeren Austrittsöffnung wird auch der Durchsatz (Partikelvolumen pro Zeiteinheit) ohne übermäßige Erhöhung der Strömungsgeschwindigkeit vergrößert. Außerdem stellt ein Verhältnis von Höhe der Austrittsöffnung zu Breite der Eintrittsöffnung von mindestens 1,25 sicher, dass kein Rückstau im Partikelstrom auftritt.

Gemäß einer Ausführungsform der Erfindung ist die Leitfläche als "klothoidale" Übergangsfläche ausgebildet. Unter einer klothoidalen Übergangsfläche versteht man eine Übergangsfläche, deren Krümmungsradius kontinuierlich zunimmt. Unter einer klothoidalen Übergangsfläche sollen im Sinne der vorliegenden Erfindung sowohl klassische Klothoide verstanden werden, bei denen der Krümmungsradius linear zunimmt, als auch Potenzklothoide, bei denen die Krümmung nicht linear zunimmt. Alternativ kann der Verlauf des Krümmungsradius der Übergangsfläche auch über Bézier- oder Spline-Segmente, beispielsweise als kubischer Bézier-Spline, dessen Endtangenten vertikal bzw. horizontal sind, beschrieben werden.

Die Klothoide zeichnet sich dadurch aus, dass ihr Krümmungsradiums entlang der Kurve kontinuierlich ansteigt, was zu einem besonders gleichmäßigen Übergang zwischen einer vertikalen und horizontalen Strömungsrichtung führt. Dadurch werden abrupte Richtungsänderungen und die damit verbundenen mechanischen Belastungen auf das Katalysatormaterial vermieden. Vermeidung von Stoßbelastungen auf das häufig poröse oder spröde Katalysatormaterial führt auch zu einer signifikanten Reduktion von Abrieb, Bruch und Feinstaubbildung, was wiederum die Reaktorleistung und Standzeit des Materials verbessert. Da sich eine klothoidale Fläche mathematisch präzise beschreiben lässt, können die entsprechenden Formen auch mittels CAD-/CNC-Systemen leicht umgesetzt werden. In Kombination mit dem erfindungsgemäß vorgesehenen Verhältnis von lichter Höhe zu lichter Breite von wenigstens 1,25 wird eine längere Leitfläche bereitgestellt, was wiederum eine sanftere Krümmungsprogression und damit eine weitere Schonung des Katalysatormaterials ermöglicht.

Gemäß der zweiten Ausführungsform der Erfindung ist das Antriebslager innerhalb eines umlaufenden Lagergehäuses angeordnet, das mit einem Spülgasstrom beaufschlagbar ist. Diese Maßnahme dient insbesondere dem Schutz und der Betriebssicherheit des Lagersystems und ist mit einer Reihe technischer Vorteile verbunden. In einer Befüllvorrichtung mit frei strömendem, feinkörnigem Katalysatormaterial besteht stets die Gefahr, dass Partikel oder insbesondere Staub (beispielsweise aus Partikelabrieb) in das Lagersystem eindringen. Durch die Beaufschlagung des Lagergehäuses mit Spülgas wird ein kontinuierlicher Luftstrom aus dem Lagergehäuse nach außen erzeugt, der das Eindringen von Feststoffen zuverlässig verhindert oder bereits eingedrungen Feststoffe wieder austrägt, was wiederum den Verschleiß an Lagerkomponenten reduziert und die Standzeit des Antriebslagers verlängert. In der Ausführungsform kann das Spülgas zudem temperiert oder getrocknet sein, wodurch sich Kondensatbildung, Temperaturschwankungen und Korrosion vermeiden lassen. Die Ausbildung eines umlaufenden, geschlossenen Lagergehäuses vereinfacht außerdem die äußere Abdichtung gegenüber dem Reaktorraum und schützt sensible Komponenten vor chemischer oder thermischer Belastung. In Kombination mit dem außerhalb des Zuführbehälters angeordneten Antriebsmotor ergibt sich ein vollständig gekapseltes, wartungsfreundliches Antriebssystem, welches den Partikelkontakt im direkten Antriebsbereich minimiert. Der Antriebsmotor kann beispielsweise als Pneumatikmotor, insbesondere als Druckluftlamellenmotor ausgebildet sein. In diesem Fall kann die Spülgasversorgung auch zum Betrieb des Pneumatikmotors verwendet werden. Bei dem Spülgas kann es sich beispielsweise um Druckluft oder ein Inertgas, wie beispielsweise Stickstoff, handeln. Insbesondere bei Verwendung von Katalysatoren, die leicht mit Sauerstoff reagieren, wird sowohl für das Spülgas als auch für den Betrieb des Antriebsmotors vorzugsweise Inertgas verwendet.

Vorteilhaft weist das Lagergehäuse einen Anschluss für die Zufuhr des Spülgases auf. Der definierte Anschluss ermöglicht eine kontrollierte und dosierbare Einleitung von Spülgas in das Lagergehäuse, was eine stabile Überdruckatmosphäre gewährleistet und so den Schutz des Antriebslagers optimiert. Der Anschluss ermöglicht außerdem die Integration an vorhandene Druckluft- oder Inertgasnetze bzw. die Verbindung mit einem außerhalb des Reaktors angeordneten Kompressor. Der Anschluss kann mit standardisierten Regelventilen oder Sensorik ausgestattet werden, was eine Überwachung und Automatisierung des Spülgassystems erlaubt, beispielsweise zur Detektion von Leckagen oder zur Anpassung an wechselnde Betriebsbedingungen.

In einer weiteren Ausgestaltung der Erfindung wird das Spülgas wenigstens teilweise aus dem Lagergehäuse in den Partikelstrom im Inneren der Befüllvorrichtung abgeleitet. Das Spülgas dient daher nicht nur dem Schutz des Antriebslagers, sondern führt die Staubpartikel gezielt in den Partikelstrom zurück. Gleichzeitig verhindert das Spülgas weitere Staubablagerungen im Inneren der Befüllvorrichtung. Außerdem wird durch die vorgeschlagene Strömungsführung ein Partikelrückstrom aus dem Zuführbehälter oder der Verteileinrichtung in den Lagerbereich gezielt verhindert.

Gemäß der dritten Ausführungsform der Erfindung weist das untere Ende des Zuführbehälters wenigstens einen Ringeinsatz auf, der den Partikelstrom dem wenigstens einen Verteilelement zuleitet. Vorzugsweise besteht der Ringeinsatz dabei aus wenigstens einen konzentrischen, radialsymmetrisch um die Drehachse angeordneten Ringrohr, das jeweils einen Teilstrom des Partikelstroms einem zugeordneten Verteilelement zuführt. Der Ringeinsatz wirkt dabei als strömungstechnisches Führungselement, das den aus dem Zuführbehälter austretenden Partikelstrom exakt an der gewünschten Position und im definierten Querschnitt dem jeweiligen Verteilelement zuführt. Dadurch wird die geometrische Kopplung zwischen Zuführbehälter und Verteilelement optimiert und eine gleichmäßigere Anströmung der Eintrittsöffnung des Verteilelements sichergestellt. Der Ringeinsatz trägt auch dazu bei, asymmetrische oder schräg einfallende Strömungsanteile zu eliminieren, wie sie beispielsweise durch Wandreibung oder ungleichmäßige Partikelförderung im Zuführbehälter entstehen können. Dadurch wird eine gleichmäßige axiale und radialsymmetrische Strömung erzeugt, was für die Umlenkung und Verteilung im Verteilelement entscheidend ist. Da der Ringeinsatz vorteilhaft wenigstens ein konzentrisches radialsymmetrisch um die Drehachse angeordnetes Ringrohr umfasst, werden auch ideale Anströmverhältnisse für die klothoidale Leitfläche im Verteilelement gewährleistet. Der Ringeinsatz kann modular an die jeweilige Größe des Reaktors bzw. den gewünschten Partikeldurchsatz angepasst werden. Vorzugsweise umfasst der Ringeinsatz wenigstens drei Ringrohre, sodass eine mehrkanalige und gleichzeitige Partikelverteilung auf mehreren Ebenen der Verteileinrichtung ermöglicht wird. Dies steigert die Gesamtkapazität der Befüllvorrichtung und erlaubt eine effizientere und gleichmäßigere Befüllung des Reaktors. Zudem reduziert die Aufteilung des Gesamtpartikelstroms auf mehrere Teilströme die lokale Massenflussdichte in jedem Ringrohr, was die mechanische Stressbelastung der Partikel verringert und Abrieb und Bruch reduziert.

Die Ringrohre können über Stege miteinander verbunden und stufenartig entlang der mittigen Drehachse (A) nach unten versetzt angeordnet sein. Dadurch ergeben sich Auflageflächen für Durchflussregulierungsmittel, wie insbesondere frei einlegbare Ringblenden mit definierter zentraler Durchlassöffnung mit welchen der Partikelfluss gezielt moduliert werden kann, um eine möglichst Ebene Partikelfront in dem zu befüllenden Behälter auszubilden.

Gemäß einer Weiterbildung der Erfindung, die mit allen Ausführungsformen kombinierbar ist, sind der Antriebsmotor und das Antriebslager an einer zwischen Zuführbehälter und Verteileinrichtung angeordneten radialen Trägerplatte befestigt, wobei die Trägerplatte die Oberseite des Lagergehäuses bildet. Durch die gemeinsame Trägerplatte werden Antriebsmotor, Lager und Verteileinheit zu einer mechanisch steifen, präzise ausgerichteten Einheit zusammengeführt, was die Laufruhe der Verteileinrichtung verbessert und Vibrationen und Versatzkräfte reduziert. Die Doppelfunktion der Trägerplatte als mechanisches Tragelement und Bestandteil des Lagergehäuses reduziert den Bedarf an zusätzlichen Strukturelementen, was die Gesamtaufbau der Befüllvorrichtung kompakter gestaltet, was wiederum insbesondere bei begrenzten Einbauräumen von Vorteil ist.

Gemäß einer Variante der Ausführungsformen, bei denen das Lagergehäuse mit einem Spülgasstrom beaufschlagbar ist, kann der Festlagerring des Antriebslagers mit der Trägerplatte verbunden, wobei zwischen Trägerplatte und Festlagerring Durchtrittsöffnungen für das Spülgas ausgespart sind, welche dem Spülgas ermöglichen, vom Lagergehäuse in das Innere der Befüllvorrichtung zu gelangen. Die Durchtrittsöffnungen können dabei als eine Vielzahl von radial verteilten Kanälen in der Oberfläche der Trägerplatte oder in der Oberfläche des Festlagerrings oder in beiden Bauelementen ausgespart sein. Für eine effektive Abfuhr des Spülgases aus dem Lagergehäuse ins Innere der Befüllvorrichtung reichen wenige, über den Umfang des Kontaktbereichs zwischen Trägerplatte und Festlagerring verteilten Durchtrittsöffnungen, sodass die strukturelle Integrität der mechanischen Verbindung zwischen Festlagerring und Trägerplatte erhalten bleibt.

Gemäß einer weiteren Ausführungsform wird das Spülgas gezielt über einen zwischen dem Drehlagerring des Antriebslagers und dem Ringeinsatz ausgebildeten Zwischenraum in den Partikelstrom abgeleitet. Dabei wird der Partikelstrom zwischen dem äußersten Ringrohr des Ringeinsatzes und dem Drehlagerring des Antriebslagers gebildet. Der Zwischenraum verhindert Reibung zwischen dem starren Ringrohr des Ringeinsatzes und dem rotierenden Drehlagerring des Antriebslagers. Ein solcher Zwischenraum ist konstruktionsbedingt schwer zu reinigen, sodass die erfindungsgemäß vorgesehene Spülgasführung nicht nur der Ableitung des staubbeladenen Spülgases aus dem Lagergehäuse ins Innere der Befüllvorrichtung dient, sondern gleichzeitig den Zwischenraum belüftet und die Bildung von Materialansammlungen in diesem Bereich verhindert, was die Reinigung und Instandhaltung der Befüllvorrichtung verbessert.

Bei allen Ausführungsformen kann das Antriebslager ein Kugellager umfassen. Kugellager zeichnen sich durch geringe Reibung und einen gleichmäßigen, leichten Lauf aus, was eine energieeffiziente Rotation der Verteileinrichtung ermöglicht. Das Kugellager bildet die Verbindung zwischen innerem Drehlagerring und äußerem Festlagerring, wobei Dichtungslippen, wie z.B. Gummilippen vorgesehen sein können, um das Kugellager gegen unerwünschten Staubeintrag abzudichten.

Bei Ausführungsformen, bei denen eine Trägerplatte vorgesehen ist, kann der Antriebsmotor an der Trägerplatte relativ zur vertikalen Drehachse radial verschiebbar befestigt sein, was eine einfache Riemenspannung oder -entlastung ohne separate Spannmechanismen ermöglicht. Außerdem kann der Antriebsmotor je nach gewähltem Motor, Riemenscheibe oder gewünschter Übersetzung flexibel positioniert werden, was eine hohe Adaptionsfähigkeit an verschiedene Leistungsanforderungen gewährleistet.

Vorzugsweise kann die Verteileinrichtung außerdem ein zentrales unteres Verteilelement mit einer zentralen kreisförmigen Eintrittsöffnung und einem zentralen Umlenkelement auf weisen, was eine optimale Nutzung des axialen Materialflusses aus dem Zuführbehälter ermöglicht. In Kombination mit den umgebenden ringförmigen Verteilelementen kann das zentrale Element eine zusätzliche Verteilzone im Reaktorzentrum abdecken, was die Homogenität der Schüttung weiter verbessert. Auch das zentrale Umlenkelement lenkt den vertikalen Partikelstrom größtenteils in einen horizontalen radial nach außen gerichteten Partikelstrom um. Zusätzlich kann in einer Bodenplatte des zentralen Verteilelements eine vertikal nach unten offene Austrittsöffnung vorgesehen sein, welche einen Teilstrom des Partikelstroms senkrecht nach unten in den Reaktorraum auslässt, sodass im zentralen Reaktorbereich ebenfalls ausreichend Material für eine gleichförmige Befüllung abgeschieden wird.

Vorzugsweise sind der Zuführbehälter und die Verteileinrichtung so dimensioniert, dass die Summe der Eintrittsflächen der Verteilelemente der Verteileinrichtung im Wesentlichen der Austrittsöffnung des Zuführbehälters entspricht, sodass bis auf eventuell vorhandene Durchflusssteuerungsmittel ein kontinuierlicher Materialfluss sichergestellt wird. Damit wird gewährleistet, dass durch die Dimensionierung des Zuführbehälters und der Verteileinrichtung keine Behinderung des Materialflusses zwischen Zuführbehälter und Verteileinrichtung entsteht. Die gleichmäßige Flächenverteilung unterstützt außerdem eine gleichmäßige Aufteilung des Partikelstroms auf alle Verteilelemente, was die Reaktorbefüllung homogenisiert und lokale Materialanhäufungen im Reaktor vermeidet. Eine Beeinflussung des Materialdurchflusses bzw. die Bildung eines Rückstaus von Material vor der Verteileinrichtung soll vielmehr über steuerbare bzw. kontrollierbare Durchflusssteuerungsmittel erfolgen, wie sie beispielsweise in der internationalen Patentanmeldung WO 2017/167957 A beschrieben sind, oder mittels hierin erstmals beschriebener frei einlegbarer Ringblenden.

Vorzugsweise weist das wenigstens eine Verteilelement in seinem radialsymmetrisch ausgebildeten starren Mittelabschnitt eine Vielzahl über seinen Umfang verteilte vertikale, voneinander beabstandete und radial nach außen verlaufende starre vertikale Stege auf, welche das Verteilelement in eine Vielzahl von radialsymmetrischen Sektoren unterteilen. Derartige starre Stege wirken als strömungstechnische Führungsrippen, die den horizontal austretenden Partikelstrom gleichmäßig in mehrere definierte Richtungen leiten, was wiederum die homogene Flächenverteilung im Reaktor begünstigt, da sich eventuelle Störungen im Materialfluss nicht über den Umfang der Verteilelemente ausbreiten können. Daher verhindern die definierten Sektoren, dass sich der Partikelstrom bevorzugt in einzelnen Bereichen ausbreitet und fördern so eine gleichmäßige Schüttdichte. Die starren Stege erhöhen zudem die mechanische Festigkeit des Verteilelements und wirken stabilisierend gegenüber Torsions- und Biegebelastungen bei Rotation, sodass die Materialstärke gegenüber stegfreien Verteileinrichtungen reduziert werden kann. Die Anzahl der Sektoren kann je nach Aufgabenstellung und Form und Größe des partikelförmigen Katalysatormaterials variieren. Beispielsweise können bei einer Verteilvorrichtung mit drei Verteilelementen für das oberste Verteilelement 20 bis 30 Sektoren, für das mittlere Verteilelement 10 bis 20 Sektoren und für das unterste Verteilelement 4 bis 10 Sektoren vorgesehen sein.

Gemäß einer bei allen Ausführungsformen möglichen Variante, weist das wenigstens eine Verteilelement an seiner Unterkante eine sich von der Austrittsöffnung radial nach außen erstreckende, umlaufende einstückige, horizontale elastische Verlängerung auf. Die elastischen Verlängerungen dienen dabei als weiche, nachgebende Führungsflächen, welche die Partikel ohne harte Kollision nach Verlassen der Austrittsöffnung weiterführen. Dabei weist die horizontale Verlängerung vorzugsweise einen über den Kreisumfang oder über wenigstens ein Kreissegment kontinuierlich größer werdenden Radius auf, sodass einzelne Sektoren mit einer kürzeren Verlängerung und andere Sektoren mit einer längeren Verlängerung versehen sind. Dies ermöglicht eine Optimierung der homogenen Befüllung des Reaktors auch bei großen Reaktorquerschnitten, während gleichzeitig die Anzahl der Verteilelemente, das heißt der Auswurfebenen, nicht erhöht werden muss.

Außerdem können elastische vertikale Verlängerungen vorgesehen sein, die sich am Ende jedes der vertikalen starren Stege radial nach außen erstrecken, was wiederum eine weiche, nachgiebige Führung der die Austrittsöffnung verlassenden Partikel über den Reaktorquerschnitt ermöglicht. Die radiale Länge der vertikalen Verlängerungen entspricht dabei typischerweise dem Radius der entsprechenden horizontalen Verlängerung, sodass auch die vertikalen Verlängerungen einen über einen Kreisumfang oder ein Kreissegment kontinuierlich größer werdenden Radius aufweisen.

Die elastischen horizontalen und vertikalen Verlängerungen können beispielsweise aus Gummi oder anderen gummielastischen Kunststoff gefertigt sein und miteinander lösbar oder fest verbunden sein.

Die elastischen Verlängerungen der einzelnen Ebenen sind vorzugsweise ebenfalls als Klothoide ausgebildet, bei der sich der Radius der horizontalen und/oder vertikalen Verlängerungen auf jeder Ebene von einem Startradius zu einem Endradius kontinuierlich verringert. Von einer Ebene zur darunterliegenden Ebene ist außerdem vorzugsweise vorgesehen, dass der Endradius der oberen Ebene dem Startradius der unteren Ebene entspricht, sodass die Radien der Verlängerungen beim Übergang von einer Ebene zur anderen kontinuierlich fortgesetzt werden.

### Kurzbeschreibung der Zeichnungen

Die Erfindung wird im Folgenden anhand eines in den beigefügten Zeichnungen dargestellten Ausführungsbeispiels näher erläutert.

In den Zeichnungen zeigen:
- Figur 1: eine perspektivische Ansicht einer Ausführungsform der erfindungsgemäßen Befüllvorrichtung;
- Figur 2: eine perspektivische Zeichnung im Teilquerschnitt der Befüllvorrichtung der Figur 1;
- Figur 3: eine schematische Darstellung einer Ringblende zur Durchflusssteuerung;
- Figur 4: eine perspektivische Zeichnung im Teilquerschnitt der Befüllvorrichtung der Figur 1 in einem anderen Blickwinkel als Figur 2;
- Figur 5: eine perspektivische Detailansicht des mittleren Verteilelements der Befüllvorrichtung der Figur 1;
- Figur 6: eine Draufsicht auf das mittlere Verteilelement der Figur 5;
- Figur 7: eine vergrößerte Querschnittsdarstellung eines Umlenkelements der Verteileinrichtung der in Figur 2 dargestellten Befüllvorrichtung;
- Figur 8: eine schematische Darstellung der Flächenverhältnisse in den Umlenkelementen der Befüllvorrichtung der Figur 1; und
- Figur 9: eine vergrößerte Detaildarstellung des Antriebslagers der in Figur 2 dargestellten Befüllvorrichtung.

### Detaillierte Beschreibung der Zeichnungen

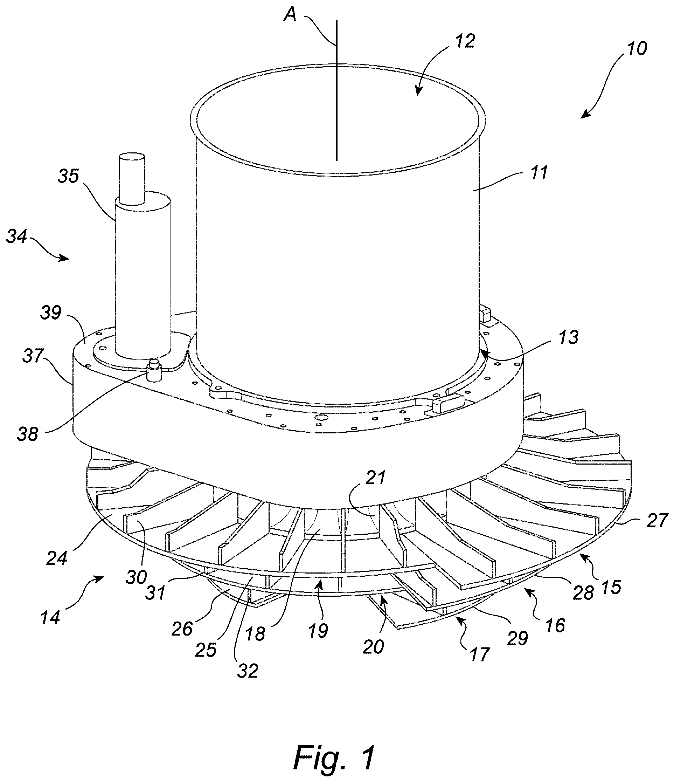

In Figur 1 ist eine Ausführungsform der erfindungsgemäßen Befüllvorrichtung zur Dichtebefüllung eines (nicht dargestellten) chemischen Reaktors mit partikelförmigem Katalysatormaterial in einer perspektivischen Seitenansicht dargestellt. Die Befüllvorrichtung 10 weist einen zylindrischen Zuführbehälter !! für (in den Zeichnungen nicht dargestelltes) partikelförmiges Katalysatormaterial auf. Der Zuführbehälter 11 weist eine obere Einlassöffnung 12 und eine untere Auslassöffnung 13 (nicht dargestellt) für das partikelförmige Katalysatormaterial auf.

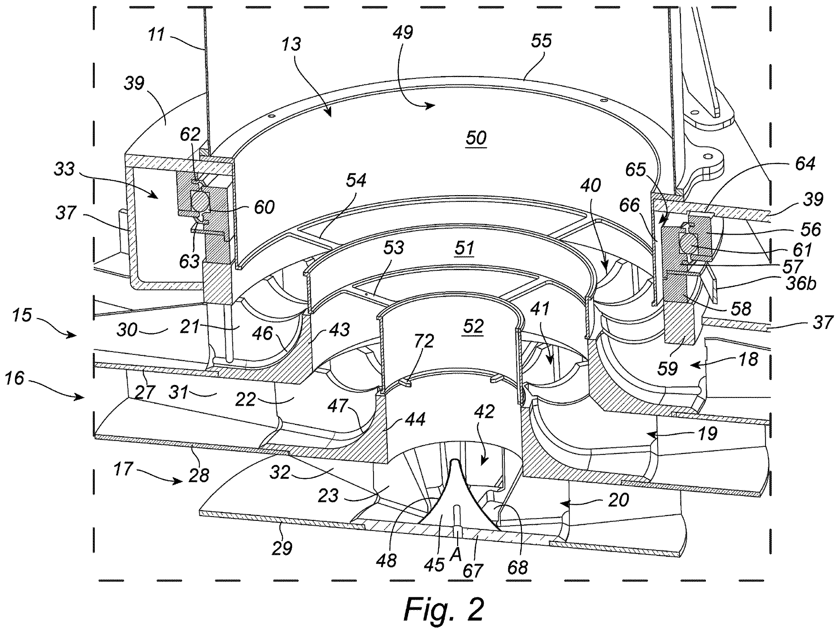

Unter dem Zuführbehälter 11 ist eine dreistufige Verteileinrichtung 14 angeordnet, die zur Verteilung des partikelförmigen Katalysatormaterials in dem chemischen Reaktor durch Zentrifugalkraft um eine vertikale mittige Drehachse A drehbar angeordnet ist. In der dargestellten Ausführungsform weist die Verteileinrichtung 14 drei vertikal untereinander angeordnete Verteilelemente 15, 16, 17 auf, welche einen im Wesentlichen vertikalen, von dem Zuführbehälter 11 kommenden Partikelstrom in einen im Wesentlichen horizontalen, radial nach außen gerichteten Partikelstrom umlenken. Durch die Drehung der Verteileinrichtung wird das partikelförmige Katalysatormaterial durch Zentrifugalkraft zusätzlich radial nach außen beschleunigt, sodass sich das Katalysatormaterial über den Querschnitt des zu befüllenden chemischen Reaktors verteilen kann. Die vertikal untereinander konzentrisch angeordneten Verteilelemente 15, 16, 17 weisen unterschiedliche Radien auf, sodass die aus den einzelnen Verteilelementen austretenden Partikel eine unterschiedlich starke Zentrifugalkraft erfahren und dadurch in radialer Richtung unterschiedlich weit in den Reaktorinnenraum ausgetragen werden. Das in der Darstellung der Figur 1 besonders gut erkennbare erste obere Verteilelement 15 weist Austrittsöffnungen 18 auf, die radial am weitesten von der Drehachse A entfernt sind, sodass die entsprechenden über das erste Verteilelement umgelenkten Partikel mit der größten radialen Geschwindigkeit in den Reaktorinnenraum ausgestoßen werden. Wie insbesondere in Figur 2 besser erkennbar ist, sind demgegenüber die Austrittsöffnungen 19 des zweiten, mittleren Verteilelements 16 radial nach innen in Richtung der Drehachse A versetzt, während die Austrittsöffnungen 20 des dritten, unteren Verteilelements 17 radial noch weiter nach innen in Richtung Drehachse A versetzt sind. Wie man in Figur 1 bei dem ersten, oberen Verteilelement 15 und in Figur 1 auch bei den Verteilelementen 16 und 17 erkennt, weisen die Verteilelemente 15, 16, 17 zahlreiche über ihren Umfang verteilte, vertikale, voneinander beabstandete und radial nach außen verlaufende starre Stege 21, 22, 23 auf, welche die Verteilelemente in eine Vielzahl von radialsymmetrischen Sektoren 24, 25, 26 unterteilen. Die Verteilelemente 15, 16, 17 weisen zudem eine sich von den jeweiligen Austrittsöffnungen radial nach außen erstreckende, umlaufende einstückige, horizontale elastische Verlängerung 27, 28, 29 auf, die einen über ihren Kreisumfang bzw. über ein Kreissegment kontinuierlich größer werdenden Radius aufweisen. Dadurch kann auf der Ebene jedes Verteilelements 15, 16, 17 die Auswurfweite des partikelförmigen Katalysatormaterials zusätzlich beeinflusst und eine homogenere Verteilung des Katalysatormaterials über den Querschnitt des Reaktors erzielt werden. Wie man in Figur 1 insbesondere bei dem ersten oberen Verteilelement 15 erkennt, sind außerdem elastische vertikale Verlängerungen 30, 31, 32 vorgesehen, die sich am Ende jedes vertikalen starren Stegs 21, 22, 23 der Verteilelemente 15, 16, 17 radial nach außen erstrecken und im Wesentlichen den gleichen über den Kreisumfang bzw. ein Kreissegment kontinuierlich größer werdenden Radius aufweisen. Auch auf Höhe der elastischen Verlängerungen 27, 28, 29 wird daher die sektorielle Unterteilung der Verteilelemente 15, 16, 17 fortgesetzt.

Zwischen dem Zuführbehälter 11 und der Verteileinrichtung 14 ist ein Antriebslager 33 angeordnet, welches den starren Zuführbehälter 11 mit der drehbaren Verteileinrichtung 14 drehbar verbindet. Das Antriebslager 33 ist detaillierter in Figur 2 dargestellt.

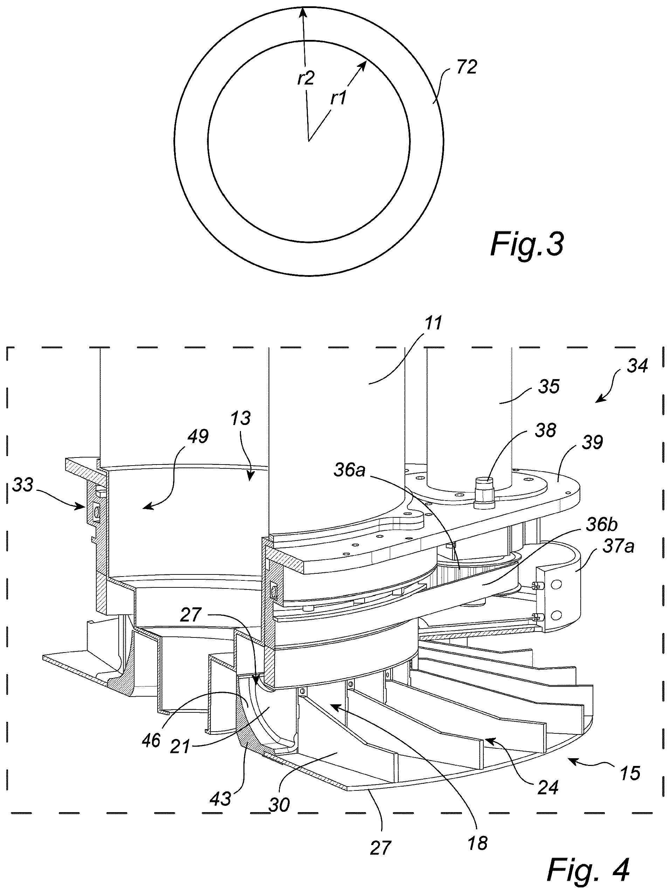

Die Befüllvorrichtung 10 umfasst außerdem eine Antriebseinrichtung 34, die einen seitlich versetzt zu der vertikalen Drehachse A außerhalb des Zuführbehälters 11 angeordneten Antriebsmotor 35 und einen Riemenantrieb 36 aufweist, der die Verteileinrichtung 14 über das Antriebslager 33 in Rotation versetzen kann. Wie insbesondere in Figur 4 erkennbar ist, umfasst der Riemenantrieb 36 ein mit dem Antriebsmotor 35 verbundenes Antriebsrad 36a und einen Antriebsriemen 36b, der die Drehbewegung des Antriebsrades 36a auf das Antriebslager überträgt. 33 Das Antriebslager 33 und der Riemenantrieb 36 sind von einem Lagergehäuse 37 umgeben, das über einen Spülgasanschluss 38 mit Druckluft oder Inertgas beaufschlagbar ist. Der Zuführbehälter 11 und der Antriebsmotor 35 sind auf einer Trägerplatte 39 befestigt, welche die Oberseite des Lagergehäuses 37 bildet. Als Antriebsmotor 35 wird ein Druckluftlamellenmotor verwendet.

Figur 2 zeigt eine perspektivische Teilansicht der Befüllvorrichtung 10 der Figur 1 im Teilquerschnitt. Elemente, die bereits im Zusammenhang mit der Darstellung in Figur 1 erläutert wurden, werden mit denselben Bezugsziffern bezeichnet. In Figur 2 ist insbesondere der vertikal und radial gestaffelte Aufbau der Verteileinrichtung 14 erkennbar, welche das erste oder obere Verteilelement 15, das zweite oder mittlere Verteilelement 16 und das dritte oder untere Verteilelement 17 umfasst. Das obere Verteilelement 15 ist als ringförmiges starres Verteilelement ausgebildet, das eine obere, ringförmige, im Wesentlichen horizontale Eintrittsöffnung 40 aufweist sowie die bereits in Figur 1 dargestellte, zylindrische vertikale Austrittsöffnung 18, welche durch die vertikalen starre Stege 21 in einzelne Sektoren 24 unterteilt wird. Entsprechend weist das mittlere ringförmige starre Verteilelement 16 eine obere, im Wesentlichen horizontale Eintrittsöffnung 41 und die bereits im Zusammenhang mit Figur 1 erwähnte, dort aber nicht erkennbare rechteckige vertikale Austrittsöffnung 19 auf, die durch vertikale Stege 22 in einzelne Sektoren 25 unterteilt wird. Schließlich weist das untere ringförmige starre Verteilelement 17 eine obere, im Wesentlichen horizontale Eintrittsöffnung 42 und die ebenfalls im Zusammenhang mit Figur 1 bereits erwähnte und dort ebenfalls nicht unmittelbar erkennbare, vertikale rechteckige Austrittsöffnung 20 auf, die durch vertikale Stege 23 in einzelne Sektoren 26 unterteilt wird. Jedes der Verteilelemente 15, 16, 17 weist ein Umlenkelement 43, 44, 45 auf, welches den von dem Zuführbehälter 11 kommenden im Wesentlichen vertikalen Partikelstrom in einen im Wesentlichen horizontalen Partikelstrom umlenkt. Die starren Verteilelemente 15, 16, 17 können beispielsweise durch Spritzguss, 3D-Druck hergestellt oder aus einem Kunststoffblock ausgefräst werden.

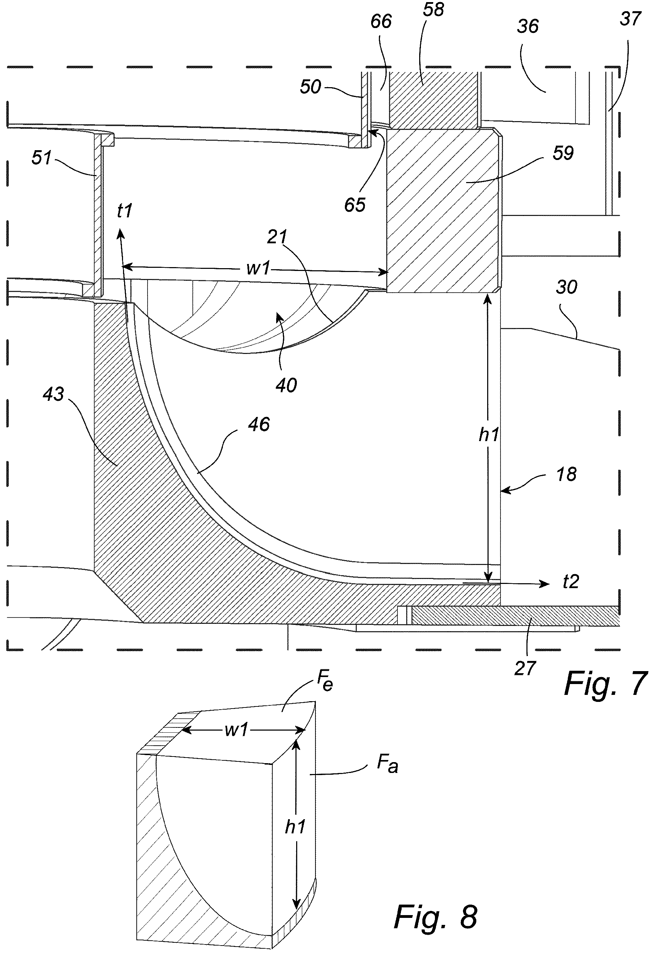

Erfindungsgemäß ist vorgesehen, dass die lichten Höhen h1, h2, h3 der vertikalen Austrittsöffnungen 18, 19, 20 der Verteilelemente größer sind als die lichten Breiten w1, w2, w3 der zugeordneten horizontalen Eintrittsöffnungen 40, 41, 42 der Verteilelemente, das heißt die Verhältnisse h1/w1 bzw. h2/w2 bzw. h3/w3 sind immer größer als 1. Der Übersichtlichkeit halber sind die lichte Höhe h1 und die lichte Breite w1 lediglich in der Detailansicht der Figur 7 für die Austrittsöffnung 18 und die Eintrittsöffnung 40 des ersten oder obersten ringförmigen Verteilelementes 15 dargestellt. Für das zweite oder mittlere ringförmige Verteilelement 16 ergibt sich eine entsprechende Geometrie mit lichter Höhe h2 und lichter Breite w2. Im dargestellten Beispiel weist das dritte oder untere Verteilelement 17 jedoch keine ringförmige Eintrittsöffnung, sondern eine kreisförmige, um die Drehachse A zentrierte Eintrittsöffnung 42 auf. In diesem Fall wird als "Breite" w3 der halbe Innendurchmesser der kreisförmigen Eintrittsöffnung 42 betrachtet, also der Abstand zwischen Drehachse A und der Innenwand des unteren Umlenkelements 45 auf Höhe der horizontalen Eintrittsöffnung 42.

Die Umlenkelemente 43, 44, 45 weisen jeweils Leitflächen für das partikelförmige Material 46, 47, 48 auf, die an der Eintrittsöffnung eine im Wesentlichen vertikale Tangente und an der Austrittsöffnung eine im Wesentlichen horizontale Tangente aufweisen, wobei sich der Krümmungsradius der Leitflächen von den jeweiligen Eintrittsöffnungen zu den Austrittsöffnungen kontinuierlich vergrößert. Die Leitflächen 46, 47, 48 können beispielsweise als klothoidale Übergangsflächen ausgebildet sein.

Wie man Figur 2 auch entnehmen kann, weist das untere Ende des Zuführbehälters 11 einen Ringeinsatz 49 auf, der aus drei konzentrisch, radialsymmetrisch um die Drehachse A angeordneten Ringrohren besteht, welche jeweils einen Teilstrom des vertikal aus dem Zuführbehälter 11 strömenden Partikelstroms einem entsprechenden Verteilelement 15, 16, 17 zuführen. Das untere Ringrohr 52, welches über der Eintrittsöffnung 42 des unteren Verteilelements 17 angeordnet ist, ist über Stege 53 mit dem mittleren Ringrohr 51 verbunden, welches oberhalb der Eintrittsöffnung 41 des mittleren Verteilelements 16 angeordnet ist. Das mittlere Ringrohr 51 ist wiederum über Stege 54 mit dem oberen Ringrohr 50 verbunden, welches oberhalb der Eintrittsöffnung 40 des oberen Verteilelements 15 angeordnet ist. Das obere Ringrohr 50 weist eine umlaufende Randleiste 55 auf, mit dem der gesamte Ringeinsatz 49 mit der Trägerplatte 39 verschraubt ist. Das untere Ringrohr 52 weißt an seiner Innenwand nach innen vorspringende Nasen 72 auf.

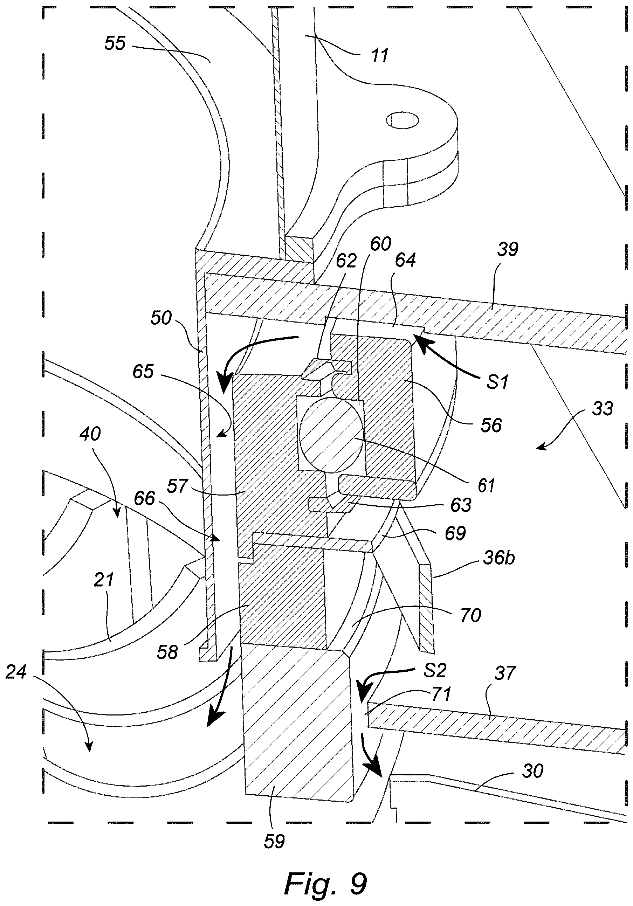

In der Darstellung der Figur 2 ist außerdem das Antriebslager 33 besser als in Figur 1 erkennbar. Das Antriebslager 33 weist einen Festlagerring 56 auf, der mit der Unterseite der Trägerplatte 39 verbunden ist, sowie einen gegenüber dem Festlagerring drehbaren Drehlagerring 57, der über Ringelemente 58, 59, welche eine Führung für den Riemenantrieb 36 bilden, mit der Verteileinrichtung 14 verbunden ist. Der Festlagerring 56 und der Drehlagerring 57 definieren einen Kugellagerraum 60, in welchem ein Kugellager 61 angeordnet ist, um die Reibung bei einer Relativbewegung zwischen Festlagerring 56 und Drehlagerring zu reduzieren. Der Kugellagerraum 60 wird oben und unten durch elastische Dichtlippen 62, 63 abgeschlossen, wobei die obere Dichtlippe 62 mit dem Festlagerring verbunden ist und an der Oberseite des Drehlagerrings anliegt, während die untere Dichtlippe 63 mit dem Drehlagerring verbunden ist und an der Unterseite des Festlagerrings anliegt. Das Antriebslager 33 ist mit seinen einzelnen Komponenten in der vergrößerten Darstellung der Figur 9 besser erkennbar.

In Figur 2 erkennt man außerdem, dass das dritte, untere Verteilelement 17 eine Bodenplatte 67 aufweist, in welcher eine Bodenöffnung 68 ausgespart ist, sodass bei dem untersten Verteilelement 17 partikelförmiges Material nicht nur unter der Wirkung der Zentrifugalkraft seitlich aus den Austrittsöffnungen 20 austreten kann, sondern auch unter der Wirkung der Schwerkraft durch die Bodenöffnung 68 nach unten ins Zentrum des zu befüllenden Behälters fallen kann. Durch diese Maßnahme wird vermieden, dass sich während des Befüllvorgangs im Zentrum des Behälters ein Trichter bildet.

Wie man in Figur 2 außerdem erkennt, ist das untere Umlenkelement 45 des unteren Verteilelements 17 als zentraler Kegel mit einer kegelförmigen unteren Leitfläche 48 ausgebildet.

Figur 3 zeigt eine schematische Darstellung einer Ringblende zur Durchflusssteuerung. Für jede der horizontalen Eintrittsöffnungen 40, 41, 42 gibt es einen Satz Ringblenden, die es erlauben, den Durchfluss durch die Eintrittsöffnungen 40, 41, 42 in vorgegebenen Schritten zu steuern. Die in Figur 3 exemplarisch dargestellte Ringblende 72 weist Innenradius r1 und einen Außenradius r2 auf. Die Ringblenden 72 sind so dimensioniert, dass sie auf die Absätze des Ringeinsatzes 49 aufgelegt werden können. Die für die Durchflussregelung der horizontalen Eintrittsöffnung 40 bestimmten Ringblenden 72 weisen einen Außendurchmesser r2 auf, der dem Innendurchmesser des oberen Ringrohrs entspricht. Die Ringblenden können daher auf den durch die Stege 54 definierten Absatz des Ringeinsatzes 49 aufgelegt werden. Der Innendurchmesser r1 der für die Durchflussregelung der horizontalen Eintrittsöffnung 40 bestimmten Ringblenden 72 variiert dann vorgegebenen Schritten zwischen dem Außendurchmesser der mittleren Ringrohrs 51 (was einem vollständigen Verschluss der Eintrittsöffnung 40 entspricht und einem Wert, der etwas geringer als der Außenradius r2 ist (was einer nahezu offenen Eintrittsöffnung 40 entspricht). Entsprechend weisen die für die Durchflussregelung der horizontalen Eintrittsöffnung 41 bestimmten Ringblenden 72 einen Außendurchmesser r2 auf, der dem Innendurchmesser des mittleren Ringrohrs entspricht und einen Innendurchmesser r2, der dem Außendurchmesser des unteren Ringrohrs 52 entspricht, so dass dieser Ringblendensatz auf den Stegen 53 aufgelegt werden kann. Die für die Durchflussregelung der horizontalen Eintrittsöffnung 42 bestimmten Ringblenden 72 weisen einen Außendurchmesser r2 auf, der dem Innendurchmesser des unteren Ringrohrs entspricht, so dass die Ringblenden auf die Nasen 72 des unteren Ringrohres 52 aufgelegt werden können. Der Innendurchmesser kann in diesem Fall sogar Null sein, was einem vollständigen Verschluss der Eintrittsöffnung 42 entspricht. Typischerweise kann man 10 Ringblenden pro Eintrittsöffnung 40, 41, 42 vorsehen, die so dimensioniert sind, dass der Durchlass zwischen 0 und 90% variiert werden kann. Wenn keine Ringblende 72 eingelegt ist, ist die Eintrittsöffnung vollständig offen (100%).

Figur 4 zeigt eine perspektivische Darstellung der Befüllvorrichtung 10 der Figur 1 im Teilquerschnitt aus einer anderen Blickrichtung, wobei insbesondere die Antriebseinrichtung 34 mit dem Antriebsmotor 35 und dem Riemenantrieb 36 besser erkennbar ist. Der Einfachheit halber wurde hier nur das obere Verteilelement 15 der drei Verteilelemente der Verteileinrichtung 14 dargestellt. Ferner wird in der Darstellung der Figur 3 das Lagergehäuse 37 nur durch ein Teilelement 37a angedeutet, damit der Riemenantrieb 36 besser erkennbar ist. Ferner ist das Antriebslager 33 nur schematisch angedeutet. Zum Aufbau des Antriebslagers 33 wird insbesondere auf die Detailansicht der Figur 9 verwiesen. Ansonsten werden Elemente, die bereits im Zusammenhang mit den Figuren 1 und 2 erläutert wurden, wieder mit denselben Bezugsziffern bezeichnet. Man erkennt insbesondere, dass der Riemenantrieb 36 ein von dem Antriebsmotor 35 angetriebenes Antriebsrad 36a und einen Antriebsriemen 36b umfasst, der die Drehbewegung des Antriebsrads 36a auf das Antriebslager 33 überträgt.

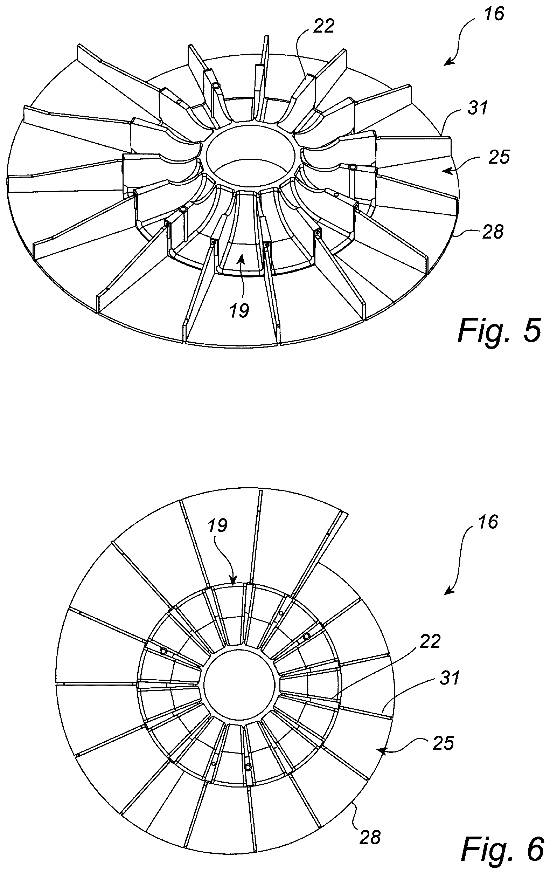

Figur 5 zeigt eine perspektivische Detailansicht des mittleren Verteilelements 16 der Befüllvorrichtung der Figur 1 und Figur 6 zeigt eine Draufsicht auf das mittlere Verteilelement 16 der Figur 5. Man erkennt exemplarisch wie sich der durch den Außenumfang der horizontalen elastischen Verlängerungen 28 definierte Außenradius des Verteilelementes 16 ausgehend von seinem starren, radialsymmetrischen Mittelteils über den Umfang nach Art einer Klothoide vergrößert, so dass für unterschiedliche Sektoren 25 unterschiedliche Auswurfweiten für das partikelförmige Material erzielt werden. Analoges gilt für die Verteilelemente 15 und 17.

Figur 7 zeigt eine vergrößerte Darstellung des oberen Verteilelementes 15 der Verteileinrichtung 14. Man erkennt insbesondere, dass die lichte Höhe h1 der Austrittsöffnung 18 deutlich größer, insbesondere ca. 25-50% größer, als die lichte Weite w1 der Eintrittsöffnung 40 des oberen Verteilelementes ist. Man erkennt an dieser Darstellung auch genauer, dass die obere Leitfläche 46 des oberen Verteilelementes 15 an der Eintrittsöffnung 40 eine im Wesentlichen vertikale Tangente t1 und an der Austrittsöffnung 18 eine im Wesentlichen horizontale Tangente t2 aufweist. Die größere Höhe der Austrittsöffnung wird dadurch gewährleistet, dass sich der Krümmungsradius der Leitfläche 46 von der Eintrittsöffnung 40 zur Austrittsöffnung 18 kontinuierlich vergrößert, wobei kontinuierlich im mathematischen Sinne als "monoton" im Gegensatz zu "streng monoton" verstanden wird, das heißt, der Krümmungsradius soll sich vergrößern, allerdings sind auch Abschnitte möglich, in denen der Krümmungsradius gleichbleibt, insbesondere im Eingangs- und Ausgangsbereich, wo bereits die horizontale bzw. vertikale Tangente erreicht wurde. Eine entsprechende Leitfläche kann beispielsweise als klothoidale Übergangsfläche ausgebildet sein.

Figur 8 zeigt eine schematische Darstellung der Flächenverhältnisse in den Umlenkelementen der Befüllvorrichtung der Figur 1. Man erkennt, dass eine im wesentlichen trapezförmige Eintrittsfläche Fₑ mit lichter Breite w1 in eine größere Austrittsfläche Fₐ mit lichter Höhe h1 übergeht.

In Figur 9 ist die bereits im Zusammenhang mit Figur 2 beschriebenen Ausgestaltung des Antriebslagers 33 detaillierter dargestellt. So erkennt man beispielsweise eine vorteilhafte Führung des Antriebsriemens 36b durch das Antriebslager 33. Zwischen dem Drehlagerring 57 und dem Ringelement 58 ist ein Führungsring 69 eingelegt, der radial nach außen vorspringt und eine obere Führung für den Antriebsriemen 36b bildet. Außerdem ist die radiale Dicke des Ringelements 59 größer als die radiale Dicke des Ringelements 58, so dass ein Absatz 70 entsteht, welcher eine untere Führung für den Antriebsriemen 36b bildet. Außerdem ist in Figur 9 die Führung des Spülgases aus dem Lagergehäuse 37 ins Innere der Verteileinrichtung 14 detaillierter dargestellt. Wenn der Innenraum des Lagergehäuses 37 mit einem Spülgasstrom beaufschlagt wird, kann das Spülgas im wesentlichen auf zwei Wegen aus dem Lagergehäuse 37 entweichen, die in Figur 9 durch dicke Pfeile S1 und S2 angedeutet sind. Zum einen sind über den Umfang der Trägerplatte 39 verteilt zwischen der Trägerplatte 39 und dem mit der Trägerplatte verbundenen Festlagerring 56 schmale Durchtrittsöffnungen 64 in der Unterseite der Trägerplatte 39 ausgespart, welche es dem Spülgasstrom ermöglichen, über den Strömungsweg S1 aus dem Lagergehäuse 37 und über einem zwischen der Außenfläche 65 des oberen Ringrohrs 50 ausgesparten Zwischenraum 66 in den inneren Bereich der Sektoren 24 des oberen Verteilelements 15 zu strömen, um von dort zusammen mit dem partikelförmigen Katalysatormaterial wieder ins Innere des Reaktors ausgetragen zu werden. Zum anderen ist zwischen den feststehenden Lagergehäuse 37 und dem rotierenden Ringelement 59 ein Spalt 71 ausgespart, welche es dem Spülgasstrom ermöglichen, über den Strömungsweg S2 aus dem Lagergehäuse 37 in den äußeren Bereich der Sektoren 24 des oberen Verteilelements 15 zu strömen.

### Bezugszeichenliste

- 10: Befüllvorrichtung
- 11: Zuführbehälter
- 12: obere Einlassöffnung des Zuführbehälters
- 13: untere Auslassöffnung des Zuführbehälters
- 14: Verteileinrichtung
- 15: erstes, oberes Verteilelement
- 16: zweiter, mittleres Verteilelement
- 17: drittes, unteres Verteilelement
- 18: Austrittsöffnung des ersten, oberen Verteilelements
- 19: Austrittsöffnung des zweiten, mittleren Verteilelements
- 20: Austrittsöffnung des dritten, unteren Verteilelements
- 21: vertikaler Steg des ersten, oberen Veteilelements
- 22: vertikaler Steg zweiten, mittleren Veteilelements
- 23: vertikaler Steg des dritten, unteren Veteilelements
- 24: Sektor des ersten, oberen Veteilelements
- 25: Sektor des zweiten, mittleren Veteilelements
- 26: Sektor des dritten, unteren Veteilelements
- 27: obere horizontale Verlängerung des oberen Verteilelements
- 28: mittlere horizontale Verlängerung des mittleren Verteilelements
- 29: untere horizontale Verlängerung des unteren Verteilelements
- 30: obere vertikale Verlängerung des oberen Verteilelements
- 31: mittlere vertikale Verlängerung des mittleren Verteilelements
- 32: untere vertikale Verlängerung des unteren Verteilelements
- 33: Antriebslager
- 34: Antriebseinrichtung
- 35: Antriebsmotor
- 36: Riemenantrieb
- 36a: Antriebsrad
- 36b: Antriebsriemen
- 37: Lagergehäuse
- 37a: Teilelement des Lagergehäuses
- 38: Spülgasanschluss
- 39: Trägerplatte
- 40: Eintrittsöffnung des oberen Verteilelements
- 41: Eintrittsöffnung des mittleren Verteilelements
- 42: Eintrittsöffnung des unteren Verteilelements
- 43: oberes Umlenkelement
- 44: mittleres Umlenkelement
- 45: unteres Umlenkelement
- 46: obere Leitfläche
- 47: mittlere Leitfläche
- 48: untere Leitfläche
- 49: Ringeinsatz
- 50: oberes Ringrohr
- 51: mittleres Ringrohr
- 52: unteres Ringrohr
- 53: Steg zwischen unterem und mittlerem Ringrohr
- 54: Steg zwischen mittlerem und oberem Ringrohr
- 55: Randleiste des oberen Ringrohrs
- 56: Festlagerring
- 57: Drehlagerring
- 58: Ringelement
- 59: Ringelement
- 60: Kugellagerraum
- 61: Kugellager
- 62: obere Dichtlippe
- 63: untere Dichtlippe
- 64: Durchtrittsöffnung
- 65: Außenfläche des oberen Ringrohrs
- 66: Zwischenraum
- 67: Bodenplatte
- 68: Bodenöffnung
- 69: Führungsring
- 70: Absatz
- 71: Spalt
- 72: Ringblende
- 73: Nase

- A: Drehachse
- h1: lichte Höhe des ersten Verteilelements
- h2: lichte Höhe des zweiten Verteilelements
- h3: lichte Höhe des dritten Verteilelements
- w1: lichte Breite des ersten Verteilelements
- w2: lichte Breite des zweiten Verteilelements
- w3: lichte Breite des dritten Verteilelements
- t1: vertikale Tangente
- t2: horizontale Tangente
- S1: erster Spülluftstrom
- S2: zweiter Spülluftstrom
- r1: Innenradius der Ringblende
- r2: Außenradius der Ringblende

## Patentansprüche

1. Befüllvorrichtung (10) zur Dichtebefüllung eines chemischen Reaktors mit partikelförmigem Katalysatormaterial, umfassend
einen Zuführbehälter (11) für partikelförmiges Katalysatormaterial mit einer oberen Einlassöffnung (12) und einer unteren Auslassöffnung (13);
eine Verteileinrichtung (14), die zur Verteilung des partikelförmigen Katalysatormaterials in dem chemischen Reaktor durch Zentrifugalkraft um eine vertikale Drehachse (A) drehbar unter dem Zuführbehälter (11) angeordnet ist, wobei die Verteileinrichtung (14) wenigstens ein erstes, ringförmiges Verteilelement (15,16) umfasst, das eine obere, ringförmige, im Wesentlichen horizontale Eintrittsöffnung (40,41) mit einer lichten Breite (w1,w2), eine bezüglich der Drehachse (A) radial nach außen gerichtete, im Wesentlichen vertikale Austrittsöffnung (18,19) mit einer lichten Höhe (h1,h2) und ein zwischen der Eintrittsöffnung und der Austrittsöffnung angeordnetes Umlenkelement (43,44) aufweist, wobei das Umlenkelement einen von dem Zuführbehälter (11) kommenden, im wesentlichen vertikalen Partikelstrom in einen im wesentlichen horizontalen Partikelstrom umlenkt;
ein radialsymmetrisch zu der Drehachse (A) angeordnetes Antriebslager (33), das einen mit dem Zuführbehälter () direkt oder indirekt verbundenen Festlagerring (56) und einen mit der Verteileinrichtung (14) verbundenen Drehlagerring (57) aufweist; und
eine Antriebseinrichtung (34), die einen seitlich versetzt zu der vertikalen Drehachse (A) außerhalb des Zuführbehälters (11) angeordneten Antriebsmotor (35) und einen Riemenantrieb (36) aufweist, wobei der Antriebsmotor (35) über den Riemenantrieb (36) den Drehlagerring (57) des Antriebslagers (33) antreibt;
**dadurch gekennzeichnet,**
**dass** die lichte Höhe (h1,h2) der Austrittsöffnung (18,19) größer als die lichte Breite (w1,w2) der Eintrittsöffnung (40,41) ist,
und **dass** das Umlenkelement (43,44) eine Leitfläche (46,47) aufweist, die an der Eintrittsöffnung (40,41) eine im wesentliche vertikale Tangente (t1) und an der Austrittsöffnung (18,19) eine im wesentlichen horizontale Tangente (t2) aufweist, wo sich der Krümmungsradius der Leitfläche (46,47) von der Eintrittsöffnung (40,41) zur Austrittsöffnung (18,19) kontinuierlich vergrößert.

2. Befüllvorrichtung nach Anspruch 1, **dadurch gekennzeichnet, dass** lichte Höhe (h1,h2) der Austrittsöffnung (18,19) wenigstens 1,25 mal größer als die lichte Breite (w1,h2) der Eintrittsöffnung (40,41) ist.

3. Befüllvorrichtung nach einem der Ansprüche 1 oder 2, **dadurch gekennzeichnet, dass** Leitfläche (46,47) als klothoidale Übergangsfläche ausgebildet ist.

4. Befüllvorrichtung nach einem der vorhergehenden Ansprüche, **dadurch gekennzeichnet, dass** das untere Ende des Zuführbehälters (11) wenigstens einen Ringeinsatz (49) aufweist, der den Partikelstrom dem wenigstens einen Verteilelement (15,16) zuleitet, wobei der Ringeinsatz (49) insbesondere aus wenigstens einem konzentrischen, radialsymmetrisch um die Drehachse (A) angeordneten Ringrohr (50,51) besteht, das jeweils einen Teilstrom des Partikelstroms einem zugeordneten Verteilelement (15,16) zuführt.

5. Befüllvorrichtung nach einem der vorhergehenden Ansprüche, **dadurch gekennzeichnet, dass** das Antriebslager (33) innerhalb eines umlaufenden Lagergehäuses (37) angeordnet ist, das mit einem Überdruck an Spülgas beaufschlagbar ist, wobei das Lagergehäuse (37) i'nsbesondere einen Anschluss (38) für die Zufuhr des Spülgases umfasst.

6. Befüllvorrichtung nach Anspruch 5, **dadurch gekennzeichnet, dass** Spülgas wenigstens teilweise aus dem Lagergehäuse (37) in den Partikelstrom in Inneren der Befüllvorrichtung abgeleitet wird.

7. Befüllvorrichtung nach Anspruch 6, **dadurch gekennzeichnet, dass** der Antriebsmotor (35) und das Antriebslager (33) an einer zwischen Zuführbehälter (11) und Verteilereinrichtung (14) angeordneten radialen Trägerplatte (39) befestigt sind, wobei die Trägerplatte (39) die Oberseite des Lagergehäuses (37) bildet, wobei insbesondere der Festlagerring (56) des Antriebslagers (33) mit der Trägerplatte (39) verbunden ist, wobei zwischen Trägerplatte und Festlagerring Durchtrittsöffnungen (64) für das Spülgas ausgespart sind; und
wobei das Spülgas insbesondere über eine zwischen dem Drehlagerring (57) des Antriebslagers und dem Ringeinsatz (49) ausgebildeten Zwischenraum (66) in den Partikelstrom abgeleitet wird

8. Befüllvorrichtung nach einem der vorhergehenden Ansprüche, wobei der Antriebsmotor (35) an der Trägerplatte (39) relativ zur vertikalen Drehachse (A) radial verschiebbar befestigt ist.

9. Befüllvorrichtung nach einem der vorhergehenden Ansprüche, **dadurch gekennzeichnet, dass** die Verteileinrichtung (14) außerdem ein zentrales Verteilelement (17) mit einer zentralen kreisförmigen Eintrittsöffnung (42) und einem zentralen Umlenkelement (45) aufweist.

10. Befüllvorrichtung nach Anspruch 9, **dadurch gekennzeichnet, dass** die Summe der Flächen der Eintrittsöffnungen (40,41,42) der Verteilelemente (15,16,17) im wesentliche der Fläche der Auslassöffnung (13) des Zuführbehälters (11) entspricht.

11. Befüllvorrichtung nach einem der vorhergehenden Ansprüche, **dadurch gekennzeichnet, dass** das wenigstens eine Verteilelement (15,16,17) eine Vielzahl über seinen Umfang verteilte vertikale, voneinander beabstandeter und radial nach Außen verlaufender starrer Stege (21,22,23) aufweist, welche das Verteilelement in eine Vielzahl von radialsymmetrischen Sektoren (24,25,26) unterteilen.

12. Befüllvorrichtung nach einem der vorhergehenden Ansprüche, **dadurch gekennzeichnet, dass** das wenigstens eine Verteilelement (15,16,17) an seiner Unterkante eine sich von der Austrittsöffnung (18,19,20) radial nach Außen erstreckende, umlaufende einstückige, horizontale elastische Verlängerung (27,28,29) aufweist, wobei insbesondere
die horizontale Verlängerung (27,28,29) einen über seinen Kreisumfang oder über wenigsten ein Kreissegment kontinuierlich größer werdenden Radius aufweist, und wobei insbesondere
außerdem elastische vertikale Verlängerungen (30,31,32) vorgesehen sind, die sich am Ende jedes der vertikalen starren Stege (21,22,23) radial nach Außen erstrecken.

13. Verteileinrichtung gemäß einem der Ansprüche 1 bis 3

14. Verfahren zur Dichtebefüllung eines chemischen Reaktors mit partikelförmigem Katalysatormaterial, umfassend die Verwendung einer Befüllvorrichtung (10) nach einem der Ansprüche 1 bis 12.
